# FASCICULE DE BREVET EUROPEEN

(11) **EP 0 857 017 B1**
(45) Date de publication et mention de la délivrance du brevet: **12.12.2001**
(21) Numéro de dépôt: 96931928.4
(22) Date de dépôt: 10.10.1996
(51) Int. Cl.: A01K 1/015, A01N 25/08, A01N 25/30

(54) **COMPOSITION POUR LE TRAITEMENT DES LITIERES POUR VOLAILLE**
MITTEL ZUR BEHANDLUNG VON VOGELSTREU
COMPOSITION FOR TREATING POULTRY LITTER

(30) Priorité: 19.10.1995 CH 296795
(43) Date de publication de la demande: 12.08.1998
(73) Titulaire: CRINA S.A., CH-1196 Gland (CH)
(72) Inventeur: ROSSI, Jean, CH-1293 Bellevue (CH)
(74) Mandataire: Micheli & Cie
(86) Numéro de dépôt international: IB9601065
(87) Numéro de publication internationale: WO9714298

(56) Documents cités:
- EP-A- 0 338 398
- US-A- 5 208 257
- US-A- 5 280 042

## Description

La présente invention se rapporte à une composition pour le traitement des litières pour volaille, ainsi qu'à un procédé pour l'utilisation de cette composition, afin de réduire les effets négatifs de la coccidiose chez la volaille.

La coccidiose est une maladie notamment de la volaille due à l'infection provoquée par une ou plusieurs espèces de coccidies ou protozoaires de grande taille de type sporozoa. Ces protozoaires, fréquents dans tous les élevages de volaille, sont ingérés par les animaux sous forme d'oocystes sporulés. Ils subissent alors dans le tube digestif des animaux un cycle de développement et de multiplication tel, qu'à partir de quelques oocystes sporulés, sont excrétés dans les matières fécales des millions d'oocystes non sporulés. Les oocystes non sporulés, non infectieux, sont transformés lors de leur séjour dans les matières fécales après excrétion, donc dans la litière, en oocystes sporulés, infectieux. Mais, seule une partie des oocystes non sporulés est transformée en oocystes sporulés; or, l'intensité de la sporulation dépend de la composition des matières fécales: teneur en humidité, teneur en oxygène, pH, etc. Si la sporulation est intense, les animaux réinfectés périssent ou voient leur croissance et leur production très réduites. Si la sporulation est modérée, les animaux ne souffrent que d'une légère infection et sont ainsi à même de développer une immunité.

Le but de la présente invention consiste donc à fournir une composition destinée à être incorporée dans la litière pour volaille, dont l'action soit basée sur la réduction de la sporulation des oocystes dans ladite litière et permettre de supprimer pratiquement la réinfection pathogène de la volaille.

On connaît déjà notamment du document GB-A-2 108 389 des compositions désinfectantes pour le traitement de litières qui contiennent comme agent biocide un acide alkylbenzène-sulfonique dissous dans une base huileuse hydrophobe. De telles compositions sont destinées à agir uniquement sur la litière elle-même, et l'agent désinfectant qu'elles contiennent peut se révéler néfaste pour les animaux qui les ingéreraient.

Or, le présent inventeur a pu montrer que l'incorporation à la litière d'au moins un agent émulsifiant tensioactif alimentaire approprié permettait d'obtenir de manière tout à fait inattendue les effets recherchés par la présente invention pour réduire de façon significative les effets négatifs de la coccidiose chez la volaille, plus particulièrement en diminuant la sporulation des oocystes qui est à l'origine des lésions graves dues à une litière infectée.

Ainsi, la composition pour le traitement des litières pour volaille afin de réduire les effets de la coccidiose, objet de l'invention et visant à atteindre le but précité, présente les caractéristiques définies dans la revendication 1.

Les agents émulsifiants peuvent se présenter sous forme de poudre hydrosoluble ou sous forme liquide, contenant de 10 à 100% desdits agents; dans les deux cas, la poudre ou le liquide sera mis en solution aqueuse avant l'emploi. Comme support pour la poudre, on peut utiliser par exemple du dextrose, alors que la forme liquide est par exemple dans l'eau ou le propylène-glycol.

L'agent émulsifiant ou émulgateur alimentaire peut être choisi avantageusement parmi ceux qui sont tolérés par les systèmes biologiques et qui sont de nature plutôt hydrophile, par exemple les esters, esters polyglycériques et esters de sorbitol d'acides gras, tels que les éthoxylates d'acides gras sous forme de mono-,di-et triesters de l'acide oléique, les éthoxylates de mono-,di-et triglycérides, les éthoxylates de mono-ou diesters de sorbitol et d'acides gras d'acide oléique ou ricinoléique, obtenus à partir d'acides gras de suif, d'huile de soja, de colza, de ricin ou de lin, ou de graisse de coco; et les alcools éthoxylés; etc, les éthoxylates obtenus à partir d'huile de ricin étant plus particulièrement avantageux.

Le traitement des litières par la composition selon l'invention peut s'effectuer par simple pulvérisation sur la litière de la composition liquide, à raison de 20 à 100 ml par m² de litière, en utilisant l'une ou l'autre des formes précitées après dilution 4 à 5 fois. Plus particulièrement, les agents tensioactifs alimentaires sont incorporés à la litière à raison de 0,2 à 5,0 g par m², de préférence de 0,5 à 2 g/m².

Comme variante, l'agent émulsifiant tensioactif alimentaire peut être combiné avec un mélange de crésols, guaïacol et résorcine, et éventuellement avec un ou plusieurs des composants suivants : tanin, thymol, eugénol et anéthol.

A titre d'exemple, une telle composition sous forme liquide peut comporter de 2,5 à 20 mg de crésols, de 2,5 à 20 mg de guaïacol, de 2,5 à 20 mg de résorcine, et de 200 à 2000 mg d'émulsifiant tensioactif alimentaire, ainsi que jusqu'à 20 mg de tanin, de thymol, d'eugénol et/ou d'anéthol.

La présente invention sera maintenant illustrée plus en détails en référence à l'Exemple ci-après.

### Exemple

### (1) Préparation des compositions

On a préparé par simple mélange des composants respectifs les deux compositions liquides A et B suivantes :
A: 2 g d'huile de ricin éthoxylée sont dissous dans de l'eau (7 ml) et du propylèneglycol (1 ml), puis la solution est diluée pour la pulvérisation d'un m² de litière.
B: 2 g d'huile de ricin éthoxylée et 1 ml de propylèneglycol, dans lequel ont été dissous 5 mg de guaïacol, 5 mg de résorcine et 5 mg de m-crésol, sont dissous dans 7 ml d'eau, puis la solution est diluée pour la pulvérisation d'un m² de litière.

### (2) Essais comparatifs en laboratoire

Une litière usuelle pour volaille a été infectée par E.Tenella non sporulée à raison de 5.000.000 oocystes/m², et a été séparée en trois parties. Les deux premières parties ont été traitées chacune par l'une des compositions selon l'invention A, respectivement B, alors que la troisième n'a pas subi de traitement (contrôle).

Après 24 heures, les oocystes ont été récupérés, additionnés d'eau et maintenus à 28°C pendant 48 heures pour sporulation.

On a alors inoculé les trois solutions obtenues à trois groupes de coquelets. Après 7 jours, les animaux ont été abattus, et les lésions ont été observées et quantifiées selon les critères suivants de J.Johnson et W.M.Reid (Experimental Parasitology, 28(1), 30-36) :
- 0: aucune lésion macroscopique
- 1: très légères lésions
- 2: quelques lésions
- 3: nombreuses lésions
- 4: très nombreuses lésions

Les observations effectuées ont donné les résultats suivants, en %, par rapport aux trois solutions inoculées obtenues à partir des litières traitées avec A, respectivement B, et de la litière non traitée.

| Gravité des lésions | Litière non traitée (contrôle) | Litière traitée avec | |
|---|---|---|---|
| | | Comp. A | Comp. B |
| 0 | 0 | 0 | 0 |
| 1 | 0 | 0 | 25 % |
| 2 | 0 | 25 % | 25 % |
| 3 | 50 % | 50 % | 50 % |
| 4 | 50 % | 25 % | 0 |

Il ressort clairement des résultats obtenus que la sporulation des oocystes a été sensiblement réduite par le traitement préalable des litières au moyen des compositions selon l'invention A et B, et que l'adjonction de phénols (crésol, guaïacol et résorcine) a amélioré l'effet de l'agent tensioactif, puisque la gravité des lésions a été réduite.

Les résultats confirment donc bien que le traitement des litières pour volaille par les compositions selon l'invention permet de réduire de manière significative le pouvoir d'infection des oocystes parvenus dans ladite litière, et de contribuer ainsi largement à diminuer les effets négatifs de la coccidiose chez la volaille.

Enfin, il est également possible de combiner le traitement des litières au moyen de la composition selon l'invention avec un traitement anticoccidien dans les aliments destinés à la volaille avec des coccidiostats usuels.

## Revendications

1. Composition pour le traitement des litières de volaille afin de réduire les effets de la coccidiose, **caractérisée par le fait qu'**elle comporte au moins un agent émulsifiant tensioactif alimentaire et un mélange de crésols, de guaïacol et de résorcine.

2. Composition selon la revendication 1 contenant de 10 à 100% d'agents tensioactifs, sous la forme d'une poudre hydrosoluble ou sous forme liquide concentrée.

3. Composition selon la revendication 1 ou la revendication 2, dans laquelle l'agent émulsifiant est choisi parmi les esters, esters polyglycériques et esters de sorbitol d'acides gras, tels que les éthoxylates d'acides gras sous forme de mono-, di- et triesters de l'acide oléique, les éthoxylates de mono-, di- et triglycérides, les éthoxylates de mono- ou diesters de sorbitol et d'acides gras d'acide oléique ou ricinoléique, obtenus à partir d'acides gras de suif, d'huile de soja, de colza, de ricin ou de lin, ou de graisse de coco, et les alcools éthoxylés.

4. Composition selon l'une des revendications 1 à 3, comportant en plus un ou plusieurs des composants suivants : tanin, thymol, eugénol et anéthol.

5. Composition selon la revendication 4, sous la forme d'une préparation liquide, comportant de 2,5 à 20 mg de crésols, de 2,5 à 20 mg de guaïacol, de 2,5 à 20 mg de résorcine, et de 200 à 2000 mg d'émulsifiant tensioactif alimentaire, ainsi que jusqu'à 20 mg de tanin, de thymol, d'eugénol et/ou d'anéthol.

6. Utilisation d'au moins un agent émulsifiant tensioactif alimentaire pour le traitement des litières de volaille.

7. Utilisation selon la revendication 6, **caractérisée par le fait que** les agents tensioactifs alimentaires sont incorporés à la litière à raison de 0,2 à 5,0 g par m², de préférence de 0,5 à 2 g/m².

8. Procédé pour le traitement de la litière pour volaille afin de réduire les effets de la coccidiose, **caractérisé par le fait qu'**on pulvérise sur cette litière de 20 à 100 ml/m² de litière de la composition selon l'une des revendications 1 à 5 sous forme liquide.

## Patentansprüche

1. Zusammensetzung für die Behandlung von Vogelstreu zur Reduzierung der Auswirkungen der Kokzidiose, **dadurch gekennzeichnet, daß** sie zumindest ein emulgierendes, oberflächenaktives, nahrhaftes Mittel und eine Mischung aus Kresol, Guajakol und Resorzin aufweist.

2. Zusammensetzung gemäß Anspruch 1 mit einem Gehalt von 10 bis 100 % an oberflächenaktiven Mitteln, in Form eines wasserlöslichen Pulvers oder in konzentrierter flüssiger Form.

3. Zusammensetzung gemäß Anspruch 1 oder Anspruch 2, in welcher das emulgierende Mittel unter den Estern, polyglyzerischen Estern und Sorbitestern der Fettsäuren gewählt wurde, wie etwa die Äthoxylate der Fettsäuren in Form von Mono-, Di- und Trisestern der Ölsäure, die Äthoxylate der Mono-, Di- und Triglyzerid, die Äthoxylate der Mono- oder Diester des Sorbit und der Fettsäuren der Ölsäure oder Rizinusölsäure, gewonnen ausgehend von Talgfettsäuren, Sojaöl, Rapsöl, Rizinusöl oder Leinöl, oder von Kokosfett, und den Athoxylalkoholen.

4. Zusammensetzung gemäß einem der Ansprüche 1 bis 3, zusätzlich eine oder mehrere der folgenden Bestandteile aufweisend: Tannin, Thymol, Eugenol, Anethol.

5. Zusammensetzung gemäß Anspruch 4, in Form einer flüssigen Aufbereitung, 2,5 bis 20 mg Kresol aufweisend, 2,5 bis 20 mg Guajakol, 2,5 bis 20 mg Resorzin, und 200 bis 2000 mg eines oberflächenaktiven, nahrhaften Emulgators, genauso wie bis zu 20 mg Tannin, Thymol, Eugenol und/oder Anethol.

6. Anwendung zumindest eines emulgierenden, oberflächenaktiven nahrhaften Mittels zur Behandlung von Vogelstreu.

7. Anwendung gemäß Anspruch 6, **dadurch gekennzeichnet, daß** die oberflächenaktiven nahrhaften Mittel im Verhältnis 0,2 bis 5,0 g pro m², vorzugsweise 0,5 bis 2,0 g/m², mit der Streu vermengt sind.

8. Verfahren für die Behandlung von Vogelstreu zur Reduzierung der Auswirkungen der Kokzidiose, **dadurch gekennzeichnet, daß** man auf diese Streu 20 bis 100 ml/m² einer Streu der Zusammensetzung gemäß einem der Ansprüche 1 bis 5 in flüssiger Form zerstäubt.

## Claims

1. Composition for treating poultry litter in order to reduce the effects of coccidiose, **characterised by** the fact that it comprises at least one emulsifying surface active alimentary agent and a mixture of cresol, guaiacol and resorcine.

2. Composition according to claim 1, containing between 10 and 100 % of surface active agents, as a water soluble powder or in concentrated liquid form.

3. Composition according to claim 1 or claim 2, within which the emulsifying agent is chosen amongst the esters, polyglyceric esters and sorbitol esters of fat acids, like the ethoxylates of fat acids in form of mono-, di- and triesters of oleic acid, the ethoxylates of mono-, di- and triglycerides, the ethoxylates of mono- or diesters of sorbitol and of fat acids of oleic acid or ricinoleic acid, obtained starting from fat acids of tallow, soya bean oil, rape-seed oil, castor oil or linseed oil, or coconut grease, and ethoxylated alcohol.

4. Composition according to one of the claims 1 to 3, further comprising one or more of the following components: tannin, thymol, eugenol and anethol.

5. Composition according to claim 4, in form of a liquid preparation, comprising between 2,5 to 20 mg cresol, between 2,5 to 20 mg guaiacol, between 2,5 to 20 mg resorcine, and between 200 to 2000 mg of a surface active alimentary emulsifier, as well as up to 20 mg of tannin, thymol, eugenol and/or anethol.

6. Utilisation of at least one emulsifying surface active alimentary agent for the treatment of poultry litter.

7. Utilisation according to claim 6, **characterised by** the fact that the surface active alimentary agents are incorporated into the litter by 0,2 to 5,0 g per m², preferentially 0,5 to 2,0 g/m².

8. Procedure for treating poultry litter in order to reduce the effects of coccidiose, **characterised by** the fact that 20 to 100 ml/m² of litter of a composition according to one of the claims 1 to 5 are pulverised in liquid form on that litter.
